# EUROPEAN PATENT APPLICATION

(11) **EP 4 277 048 A1**
(43) Date of publication of application: **15.11.2023**
(21) Application number: 23172768.6
(22) Date of filing: 11.05.2023
(51) Int. Cl.: H01R 43/28, B33Y 80/00, H01R 4/02, H01R 43/02

(54) **METHOD OF TERMINATING A WIRE BUNDLE AND A BUNDLED WIRE ELECTRICAL CONNECTOR**

(30) Priority: 11.05.2022 US 202217741785
(71) Applicant: Hamilton Sundstrand Corporation, Charlotte, NC 28217-4578 (US)
(72) Inventor: SHEPARD, Charles, DeKalb, 60115 (US); METZLER, Mark W., Davis, 61019 (US); HOROWY, John, Rockford, 61114 (US)
(74) Representative: Dehns

(57) **Abstract**

A method of electrically connecting a bundle of insulated conductors (16) in accordance with a non-limiting example includes installing an insulation portion (19) of a plurality of electrical conductors into a connector (14) having an axial outer surface (42). The insulation portion covers an electrically conductive portion. The method further includes exposing a terminal end (23) of each of the plurality of electrical conductors at the axial outer surface, and depositing an electrically conductive material (28) onto the terminal end of each of the plurality of electrical conductors at the axial outer surface of the connector such that the electrically conductive material electrically connects the electrically conductive portion of each of the plurality of electrical conductors.

## Description

### BACKGROUND

Exemplary embodiments pertain to the art of electrical wiring and, more particularly, to a termination for a wire bundle.

Electrical conductors are employed to carry electrical current from a source to a load. The electrical current can supply power, control signals, or the like. Electrical conductors are typically covered with insulation that is either removed or penetrated in order to form an electrical connection. In some installations, multiple conductors are bundled and joined by a connector. Before being joined, insulation from each of the conductors must be removed so that all of the conductors are electrically connected.

In high temperature and/or high vibration systems, the insulation surrounding the conductors may be more robust than used in a more conventional installation. The more robust insulation can be very difficult to remove from an underlying conductor. Preparing multiple conductors to be assembled in a bundle and joined through a connector is a very time consuming process. Various techniques including exposure to chemicals or the use of mechanical devices may be used to strip or remove the more robust insulation from the conductors.

### BRIEF DESCRIPTION

A method of electrically connecting a bundle of insulated conductors in accordance with a non-limiting example includes installing an insulation portion of a plurality of electrical conductors into a connector having an axial outer surface. The insulation portion covers an electrically conductive portion. The method further includes exposing a terminal end of each of the plurality of electrical conductors at the axial outer surface, and depositing an electrically conductive material onto the terminal end of each of the plurality of electrical conductors at the axial outer surface of the connector such that the electrically conductive material electrically connects the electrically conductive portion of each of the plurality of electrical conductors.

Additionally, or alternatively, in this or other non-limiting examples, the method further includes processing the terminal end of each of the plurality of electrical conductors to be substantially coplanar with the axial outer surface.

Additionally, or alternatively, in this or other non-limiting examples, processing the terminal end of each of the plurality of electrical conductors includes machining the terminal end of each of the plurality of electrical conductors and the axial outer surface of the connector.

Additionally, or alternatively, in this or other non-limiting examples, depositing the electrically conductive material includes additively manufacturing one or more layers of electrically conductive material onto the axial outer surface of the connector and the terminal end of each of the plurality of electrical conductors.

Additionally, or alternatively, in this or other non-limiting examples, depositing the electrically conductive material includes forming a pin end connector with the electrically conductive material.

Additionally, or alternatively, in this or other non-limiting examples, depositing the electrically conductive material includes forming a socket connector including an inner wall with the electrically conductive material.

Additionally, or alternatively, in this or other non-limiting examples, the method further includes forming a plurality of threads in the inner wall.

A bundled wire electrical connector in accordance with a non-limiting example includes a connector including an outer surface, an inner surface that defines a passage, a first axial end and a second axial end that is opposite the first axial end, and a plurality of conductors arranged in the connector. Each of the plurality of conductors includes an electrically conductive portion having a terminal end and an outer insulating portion surrounding the electrically conductive portion. The outer insulating portion of each of the plurality of conductors is disposed in the passage and the terminal end of each of the plurality of conductors is exposed at one of the first axial end and the second axial end. An electrically conductive material is provided on the one of the first axial end and the second axial end. The electrically conductive material electrically connecting the electrically conductive portion of each of the plurality of conductors.

Additionally, or alternatively, in this or other non-limiting examples, the electrically conductive material is deposited onto the one of the first axial end and the second axial end.

Additionally, or alternatively, in this or other non-limiting examples, the electrically conductive material forms an electrical connector element on the one of the first axial end and the second axial end.

Additionally, or alternatively, in this or other non-limiting examples, the electrical connector element projects axially outwardly of the one of the first axial end and the second axial end.

Additionally, or alternatively, in this or other non-limiting examples, the electrical connector element defines a pin connector.

Additionally, or alternatively, in this or other non-limiting examples, the electrical connector element defines a socket connector including an inner wall.

Additionally, or alternatively, in this or other non-limiting examples, the inner wall is threaded.

Additionally, or alternatively, in this or other non-limiting examples, the terminal end of each of the plurality of conductors is substantially co-planar with the one of the first axial end and the second axial end.

### BRIEF DESCRIPTION OF THE DRAWINGS

The following descriptions should not be considered limiting in any way. With reference to the accompanying drawings, like elements are numbered alike:
FIG. 1 is a cross-sectional side view of a bundled wire electrical connector, in accordance with a non-limiting example;
FIG. 2 is a cross-sectional side view of a connector of the bundled wire electrical connector of FIG. 1, in accordance with a non-limiting example;
FIG. 3 is a cross-sectional side view of insulated wires extending into the connector of FIG. 2, in accordance with a non-limiting example;
FIG. 4 is a cross-sectional side view of the connector of FIG. 3 showing terminal ends of the insulated wires after being trimmed, in accordance with a non-limiting example;
FIG. 5 is a cross-sectional side view of the bundled wire electrical connector including an electrical connector portion in the form of a pin connector, in accordance with a non-limiting example; and
FIG. 6 is a cross-sectional side view of the bundled wire electrical connector including an electrical connector portion in the form of a socket connector, in accordance with a non-limiting example.

### DETAILED DESCRIPTION

A detailed description of one or more embodiments of the disclosed apparatus and method are presented herein by way of exemplification and not limitation with reference to the Figures.

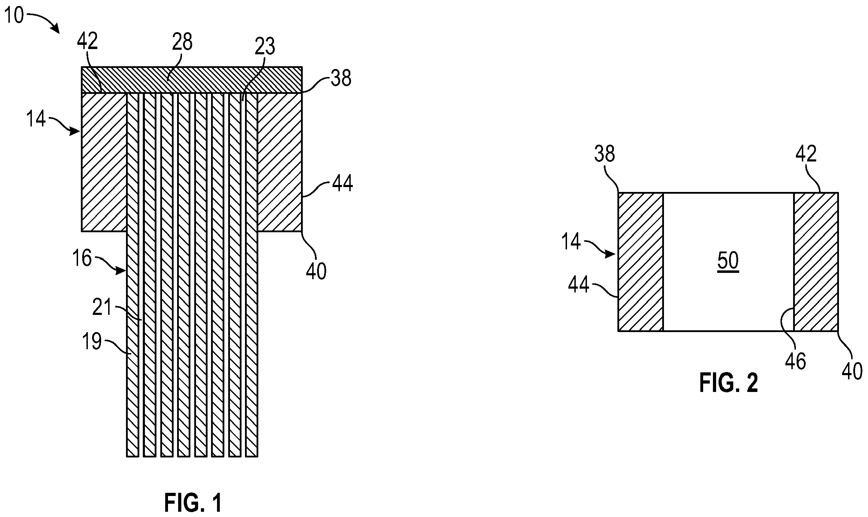

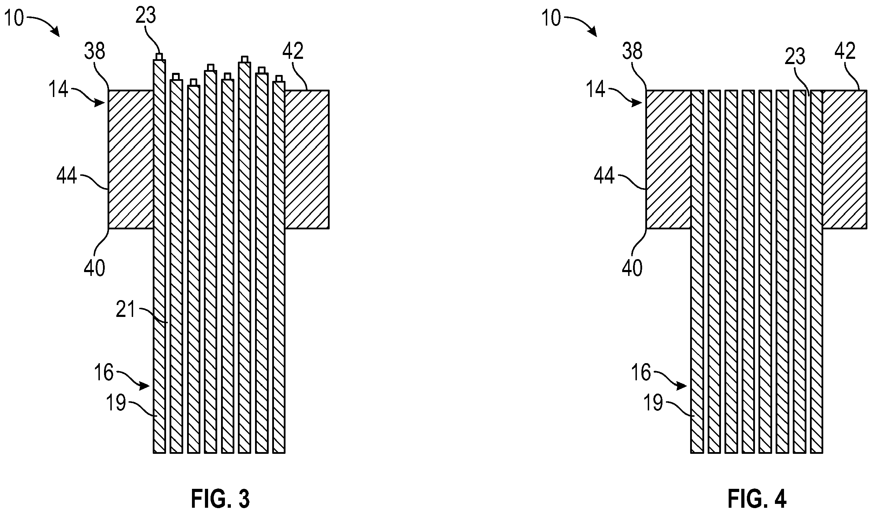

A bundled wire connector in accordance with a non-limiting example, is indicated generally at 10 in FIG 1. Bundled wire electrical connector 10 includes a connector 14 that supports a plurality of electrical conductors 16. In a non-limiting example, each of the plurality of electrical conductors 16 includes an outer insulating layer or insulation portion 19 that envelops an electrically conductive portion 21 (FIG. 3). In a non-limiting example, electrically conductive portion 21 may take the form of copper wire (not separately labeled). However, it should be understood that electrically conductive portion 21 may take on a variety of forms. In a non-limiting example, electrically conductive portion 21 of each of the plurality of electrical conductors 16 includes a terminal end, such as shown at 23, that are joined by an electrically conductive material 28.

In a non-limiting example shown in FIG. 2, connector 14 includes a first axial end 38 and a second axial end 40. Second axial end 40 is opposite to first axial end 38 which defines an axial outer surface 42. An outer surface 44 extends between first axial and 38 and second axial end 40. An inner surface 46 extends between first axial end 38 and second axial end 40 radially inwardly of outer surface 44. Inner surface 46 defines a passage 50. In a non-limiting example, plurality of electrical conductors 16 are placed in passage 50 such that the insulation portion 19 extends within passage 50.

In a non-limiting example, the insulation portion 19 of outer ones of the plurality o conductors is in contact with inner surface 46 and terminal ends 23 of the electrically conductive portion 21 may project axially outwardly of axial outer surface 42 as shown in FIG 3. At this point, connector 14 may be swaged or crimped with insulating portion 19 of the outer ones of the plurality of conductors 16 remaining in passage 50 in contact with inner surface 46.

Terminal ends 23 of each of the plurality of electrical conductors 16 may be trimmed to be substantially co-planar with first axial end 38 as shown in FIG. 4. In a non-limiting example, after being trimmed, each terminal end 23 of each of the plurality of electrical conductors 16 is exposed. Electrically conductive material 28 may now be deposited onto each of the terminal ends 23 of each of the plurality of electrical conductors 16 as shown in FIG. 1. The deposition of electrically conductive material 28 onto terminal ends 23 electrically connects each of the plurality of electrical conductors 16. The electrically conductive material 28 may also be deposited onto axial outer surface 42. By avoiding the removal of insulating portion 19 and only connecting terminal ends 23, a bundle of electrical conductors 16 may be joined without the need for costly mechanical devices or the use of harsh chemicals to needed to perform a wire stripping operation.

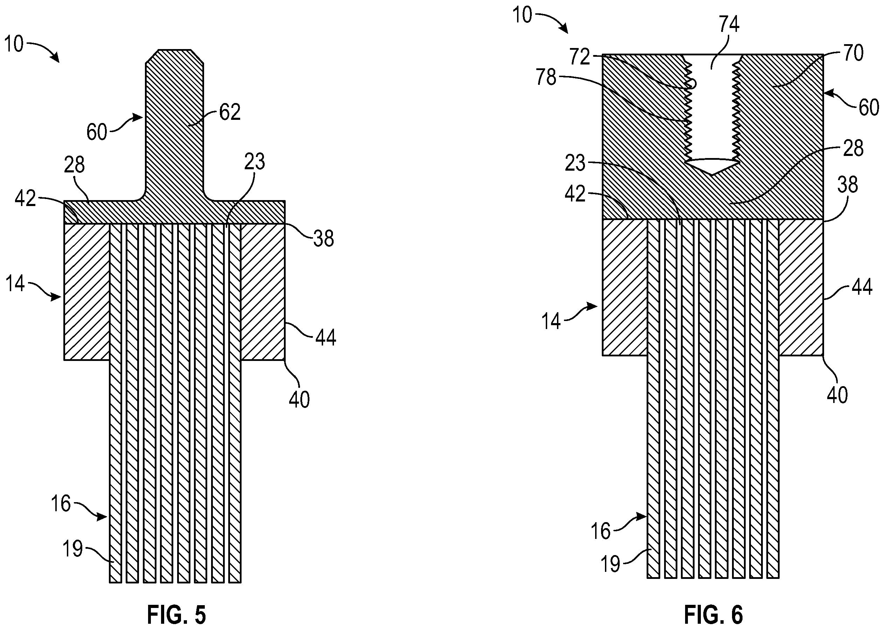

In a non-limiting example, electrically conductive material 28 may be deposited through a variety of techniques including dipping, soldering, plating and the like. In addition, electrically conductive material 28 may be additively applied to axial outer surface 42 and terminal ends 23. Electrically conductive material 28 may be additively applied to have a substantially constant cross-section such as shown in FIG. 1, or may be applied to form an electrical connector element 60 that projects axially outwardly of first axial end 38 such as shown at FIGS. 5 and 6. In one non-limiting example, electrical connector element 60 may be added in layers to form a pin connector 62 (FIG.5). In another non-limiting example, electrical connector element 60 may be added in layers to form a socket connector 70 (FIG. 6). In a non-limiting example, socket connector 70 may include an inner wall or bore 72 that defines an internal passage 74. In a non-limiting example, a plurality of threads 78 may be formed on inner wall 72.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of electrically connecting a bundle of insulated conductors (16) comprising:
installing an insulation portion (19) of a plurality of electrical conductors (16) into a connector (14) having an axial outer surface (42), the insulation portion covering an electrically conductive portion (21);
exposing a terminal end (23) of each of the plurality of electrical conductors at the axial outer surface; and
depositing an electrically conductive material (28) onto the terminal end of each of the plurality of electrical conductors at the axial outer surface of the connector such that the electrically conductive material electrically connects the electrically conductive portion of each of the plurality of electrical conductors.

2. The method of claim 1, further comprising: processing the terminal end (23) of each of the plurality of electrical conductors (16) to be substantially coplanar with the axial end.

3. The method of claim 2, wherein processing the terminal end (23) of each of the plurality of electrical conductors (16) includes machining the terminal end of each of the plurality of electrical conductors and the axial end of the connector (14).

4. The method of any preceding claim, wherein depositing the electrically conductive material (28) includes additively manufacturing one or more layers of electrically conductive material onto the axial outer surface (42) of the connector (14) and the terminal end (23) of each of the plurality of electrical conductors.

5. The method of any preceding claim, wherein depositing the electrically conductive material (28) includes forming a pin end connector with the electrically conductive material.

6. The method of any of claims 1 to 4, wherein depositing the electrically conductive material (28) includes forming a socket connector including an inner wall (72) with the electrically conductive material.

7. The method of claim 6, further comprising: forming a plurality of threads (78) on the inner wall.

8. A bundled wire electrical connector (10) comprising:
a connector (14) including an outer surface (44), an inner surface (46) that defines a passage (50), a first axial end (38) and a second axial end (40) that is opposite the first axial end;
a plurality of conductors (16) arranged in the connector, each of the plurality of conductors including an electrically conductive portion (21) having a terminal end (23) and an outer insulating portion (19) surrounding the electrically conductive portion, wherein the outer insulating portion of each of the plurality of conductors is disposed in the passage and the terminal end of each of the plurality of conductors is exposed at one of the first axial end and the second axial end; and
an electrically conductive material (28) provided on the connector at the one of the first axial end and the second axial end, the electrically conductive material electrically connecting the electrically conductive portion of each of the plurality of conductors.

9. The bundled wire electrical connector according to claim 8, wherein the electrically conductive material (28) is deposited onto the one of the first axial end (38) and the second axial end (40).

10. The bundled wire electrical connector according to claim 8 or 9, wherein the electrically conductive material (28) forms an electrical connector element on the one of the first axial end (38) and the second axial end (40).

11. The bundled wire electrical connector according to claim 10, wherein the electrical connector element (60) projects axially outwardly of the one of the first axial end (38) and the second axial end (40).

12. The bundled wire electrical connector according to claim 11, wherein the electrical connector element (60) defines a pin connector.

13. The bundled wire electrical connector according to claim 11, wherein the electrical connector element (60) defines a socket connector (70) including an inner wall (72).

14. The bundled wire electrical connector according to claim 13, wherein the inner wall is threaded.

15. The bundled wire electrical connector according to any of claims 8 to 14, wherein the terminal end of each of the plurality of conductors is substantially co-planar with the one of the first axial end and the second axial end.
